# EUROPÄISCHE PATENTSCHRIFT

(11) **EP 1 714 858 B1**
(45) Veröffentlichungstag und Bekanntmachung des Hinweises auf die Patenterteilung: **19.03.2008**
(21) Anmeldenummer: 05008421.9
(22) Anmeldetag: 18.04.2005
(51) Int. Cl.: B62D 59/04

(54) **Hilfsantrieb für einen Fahrzeuganhänger mit einseitig gelagerter Antriebsrolle**
Auxiliary drive for a trailer with an unilaterally supported driving roller
Entraînement auxiliaire pour remorque avec rouleau d'entraînement supporté d'un seul côté

(43) Veröffentlichungstag der Anmeldung: 25.10.2006
(73) Patentinhaber: Truma Gerätetechnik GmbH & Co. KG, 85640 Putzbrunn (DE)
(72) Erfinder: Wickelmaier, Peter, 81671 München (DE); Achatz, Dieter, 83173 München (DE); Brunnhuber, Hans-Georg, 83627 Warngau (DE); Müller, Jörg, 86916 Kaufering (DE)
(74) Vertreter: Müller - Hoffmann & Partner

(56) Entgegenhaltungen:
- DE-A1- 2 711 214
- FR-A- 1 433 485
- US-A- 3 826 324
- US-A- 4 596 300

## Beschreibung

Die Erfindung betrifft gemäß dem Oberbegriff von Patentanspruch 1 einen Hilfsantrieb für einen Anhänger, insbesondere für einen Wohnwagen. Ein solcher Hilfsanstrieb ist zum Beispiel aus der DE 2711214 A bekannt.

Anhänger werden üblicherweise von Zugmaschinen gezogen. So ist es bekannt, dass ein PKW einen Wohnwagen ziehen kann. Wenn der Anhänger von der Zugmaschine abgenommen ist, wird er üblicherweise von Hand in die endgültige Position geschoben. Jedoch werden heutzutage zunehmend Anhänger im Wohnwagenbereich angeboten, die aufgrund ihrer Größe und damit ihres Gewichts nur noch unter Mühen von Hand verschoben werden können. Daher wurden Hilfsantriebe entwickelt, die es ermöglichen, auch ohne Zugmaschine einen Anhänger mit Motorunterstützung zu verschieben bzw. zu drehen.

Aus der EP 0 827 898 A1 ist ein Hilfsantrieb für einen Anhänger bekannt, bei dem ein Rahmenteil fest mit dem Fahrgestell des Anhängers verbunden ist. Der Rahmenteil trägt einen relativ zu dem Rahmenteil bewegbaren Träger, von dem wiederum ein Antriebsmotor mit einer von dem Antriebsmotor antreibbaren Antriebsrolle gehalten wird. Weiterhin ist ein Bewegungsmechanismus vorgesehen, zum Bewegen des Trägers zwischen einer Ruheposition, in der die Antriebsrolle von einem Reifen des Anhängers getrennt ist, und einer Antriebsposition, in der die Antriebsrolle gegen den Reifen des Trägers gedrückt wird. Die Änderung der Position des Trägers erfolgt manuell mit Hilfe eines Hebels, der an dem Träger angesetzt werden kann.

In der EP 1 203 713 A1 wird ein anderer Hilfsantrieb für einen Anhänger beschrieben, der jedoch nach dem gleichen Prinzip arbeitet. Während allerdings die Antriebsrolle bei dem Hilfsantrieb gemäß EP 0 827 898 A1 um eine horizontale, zur Radachse parallele Achse verschwenkt wird, ist bei dem Hilfsantrieb gemäß EP 1 203 713 A1 eine vertikale Schwenkachse vorgesehen.

Bei den aus dem Stand der Technik bekannten Hilfsantrieben ist die Antriebsrolle mit der Antriebswelle von einer Halterung umgeben und an ihren beiden Enden gelagert. Dies kann in der Praxis zu folgenden Nachteilen führen:

Ein Wechsel der Antriebsrolle ist mühsam, weil dazu zunächst die Halterung abgebaut und wenigstens eines der Lager entfernt werden müssen. Die Halterung bzw. der dafür erforderliche Haltearm für das außenseitige, von der Antriebsseite entfernt liegende Lager erhöht das Gesamtgewicht. Der zu der Halterung gehörende Haltearm stellt zudem eine Art Blende dar, die einen Teil der Antriebsrolle umgibt. Dadurch können zwischen der Antriebsrolle und dem Haltearm Steine eingeklemmt werden, was im Betrieb zu einer erheblichen Beschädigung der Antriebsrolle, aber auch der Halterung führen kann. Zudem besteht eine gewisse Verletzungsgefahr durch das Einziehen von Körperteilen zwischen der Antriebsrolle und der Halterung.

Aus der DE 27 11 214 A ist ein Hilfsantrieb für einen Anhänger bekannt, bei dem ein von einem Träger gehaltener Antriebsmotor zusammen mit einer von dem Antriebsmotor angetriebenen Antriebswelle und darauf gelagerten Antriebsrollen zwischen einer Ruheposition und einer Antriebsposition bewegbar ist. Als Antriebsmotor dient ein Hydraulikmotor, dessen Antriebsleistung über eine Welle direkt zu den Antriebsrollen geführt wird.

Ein anderer Hilfsantrieb ist in der US 3,826,324 A beschrieben. Dort ist ein Elektromotor auf einer verschwenkbaren Stange angebracht. Der Elektromotor treibt über ein Planetengetriebe eine fliegend gelagerte Antriebsrolle an.

Der Erfindung liegt die Aufgabe zugrunde, einen Hilfsantrieb für einen Anhänger anzugeben, bei dem sich die oben beschriebenen Nachteile des Standes der Technik vermeiden lassen.

Die Aufgabe wird erfindungsgemäß durch einen Hilfsantrieb für einen Anhänger nach Anspruch 1 gelöst. Vorteilhafte Weiterentwicklungen der Erfindung sind in den abhängigen Ansprüchen angegeben.

Demnach weist der Hilfsantrieb erfindungsgemäß eine Antriebswelle auf, die an einem Träger an wenigstens zwei Lagerstellen gelagert und von einem Antriebsmotor drehend antreibbar ist. Ein Bewegungsmechanismus dient zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird. Die Antriebsrolle ist dabei erfindungsgemäß auf der Antriebswelle in einem Bereich befestigt, der außerhalb eines zwischen den beiden Lagerstellen liegenden Bereichs liegt. Demgemäß ist die Antriebsrolle also nicht zwischen den zwei Lagerstellen, sondern zu den zwei Lagerstellen fliegend gelagert.

Da die Antriebswelle somit einseitig durch zwei Lager an dem Träger gelagert ist, weist sie ein freies Wellenende auf, auf das die Antriebsrolle axial aufschiebbar ist.

An dem freien Wellenende ist dementsprechend kein Gegenlager vorgesehen. Die Antriebsrolle kann auf diese Weise auf dem freien Wellenende sehr einfach montiert werden, ohne dass, wie beim Stand der Technik, eine Halterung und ein Lager entfernt werden müssten.

Da eine Halterung für ein Gegenlager am Ende des Wellenendes nicht mehr erforderlich ist, besteht auch keine Gefahr mehr, dass Gegenstände zwischen der Halterung und der Mantelfläche der Antriebsrolle eingeklemmt werden können.

Da im zwischen den zwei Lagerstellen liegenden Bereich erfindungsgemäß nicht mehr die Antriebsrolle angeordnet ist, besteht genug Bauraum, um eine zuverlässige Übertragung der Antriebskraft auf die Antriebswelle zu gewährleisten.

Bei einer besonders bevorzugten Ausführungsform der Erfindung weist die Antriebsrolle einen innen liegenden, auf die Antriebswelle axial aufschiebbaren Nabenbereich und einen außen liegenden, das Rad antreibenden Mantelbereich auf, wobei der Mantelbereich eine größere axiale Erstreckung aufweist als der Nabenbereich. Dadurch kann sich die Antriebsrolle mit ihrem Mantelbereich noch über einen Teil des Trägers und insbesondere über eine der Lagerstellen axial erstrecken. Die Antriebsrolle wirkt dann gleichzeitig als Schutzelement gegen Verschmutzung und zum Beispiel Spritzwasser, das durch die Antriebsrolle wirksam von der geschützten Lagerstelle ferngehalten werden kann. Die andere Lagerstelle, die von der Antriebsrolle entfernt angeordnet ist, lässt sich ohnehin im Inneren des Trägers vorsehen, so dass sie gut gegen äußere Einwirkungen geschützt ist.

Bei einer bevorzugten Ausführungsform der Erfindung sind eine axiale Mitte des Mantelbereichs und eine axiale Mitte des Nabenbereichs zueinander versetzt. Dies ermöglicht es, dass sich der Mantelbereich im Mittel noch etwas mehr über die eine Lagerstelle erstreckt, die nahe zu der Antriebsrolle angeordnet ist. Auf diese Weise lässt sich ein axialer Abstand zwischen der axialen Mitte des Mantelbereichs und der Lagerstelle minimieren, so dass eine geringe Hebelwirkung und ein günstiger Kraftfluss für die auf die Mantelfläche einwirkenden Radialkräfte ermöglicht werden.

Vorzugsweise weist der Mantelbereich eine von einer ideal-zylindrischen Kontur abweichende Außenkontur auf, um die auf das Rad übertragbare maximale Antriebskraft zu erhöhen. Der Mantelbereich kann zum Beispiel eine Grobstruktur durch eine geeignete Form- bzw. Profilgebung aufweisen, mit der ein Formschluss zwischen der Antriebsrolle und dem anzutreibenden Rad erreicht werden kann, wenn die Antriebsrolle mit entsprechend großer Kraft gegen das Rad des Anhängers gedrückt wird. Zum Beispiel können in dem Mantelbereich Bereiche vorgesehen sein, die gegenüber anderen Bereichen radial vorstehen und dadurch tiefer in den Reifen eindringen als die anderen Bereiche. Diese anderen Bereiche, die gegenüber den vorstehenden Bereichen radial zurücktreten, das heißt, einen geringeren Abstand zur Drehachse der Antriebsrolle aufweisen, dienen der Entlastung, so dass die durchschnittliche Gesamtandrückkraft gegen den Reifen einer Andrückkraft entspricht, die dann erforderlich wäre, wenn der Grundkörper einem idealen Zylinder entsprechen würde, wie dies beim Stand der Technik gegeben ist.

Die den Mantelbereich außen abschließende Mantelfläche der Antriebsrolle kann zudem eine erhöhte Rauigkeit aufweisen. Dies ist einerseits dadurch möglich, dass auf einem die Antriebsrolle bildenden metallischen Träger eine zusätzliche Haftbeschichtung aufgebracht wird. Alternativ dazu kann die erhöhte Rauigkeit auch durch die metallische Oberfläche des metallischen Grundkörpers der Antriebsrolle selbst gebildet werden, so dass keine zusätzliche Haftbeschichtung erforderlich ist. Zum Beispiel kann die Oberfläche sandgestrahlt und damit aufgeraut werden, um die gewünschte erhöhte Rauigkeit zu erreichen. Ebenfalls ist es möglich, die aufgeraute Oberfläche durch ein Urform gebendes Verfahren bei der Fertigung des Antriebsrollen-Grundkörpers zu erzeugen. Zum Beispiel kann der gesamte Grundkörper als Aluminium-Druckgussteil hergestellt werden, wobei die Oberfläche mit Hilfe einer werkzeuggebundenen Strukturierung die gewünschte Rauigkeit erhält.

Optional kann die Oberfläche durch eine Nachbehandlung gehärtet und/oder gegen Korrosion geschützt werden. Zum Beispiel eignet sich dazu das Harteloxieren, wenn die Antriebsrolle aus Aluminium hergestellt wird.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: eine Perspektivansicht eines erfindungsgemäßen Hilfsantriebs; und
- **Fig. 2**: eine Schnittdarstellung durch den Hilfsantrieb entlang der Linie A-A.

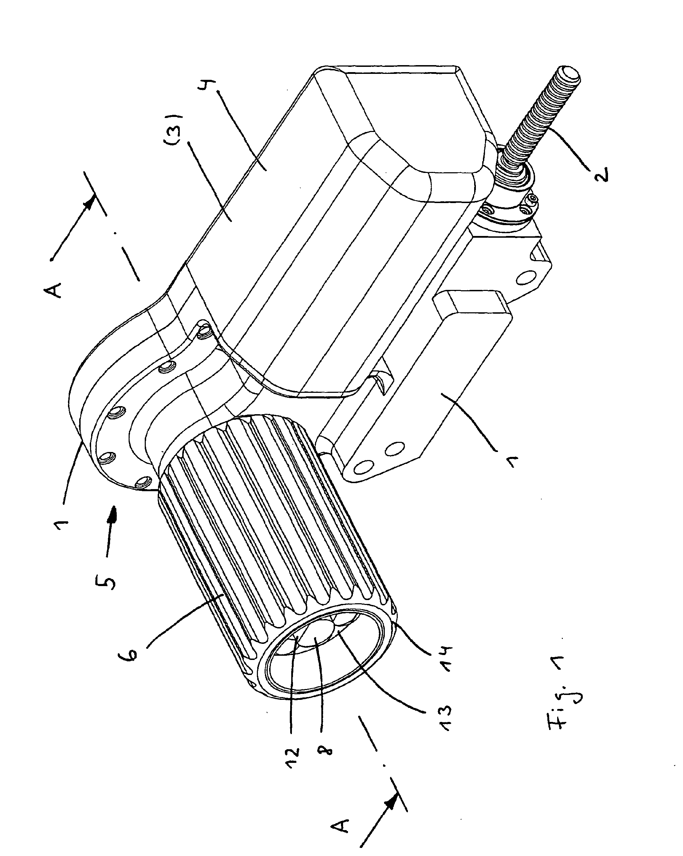

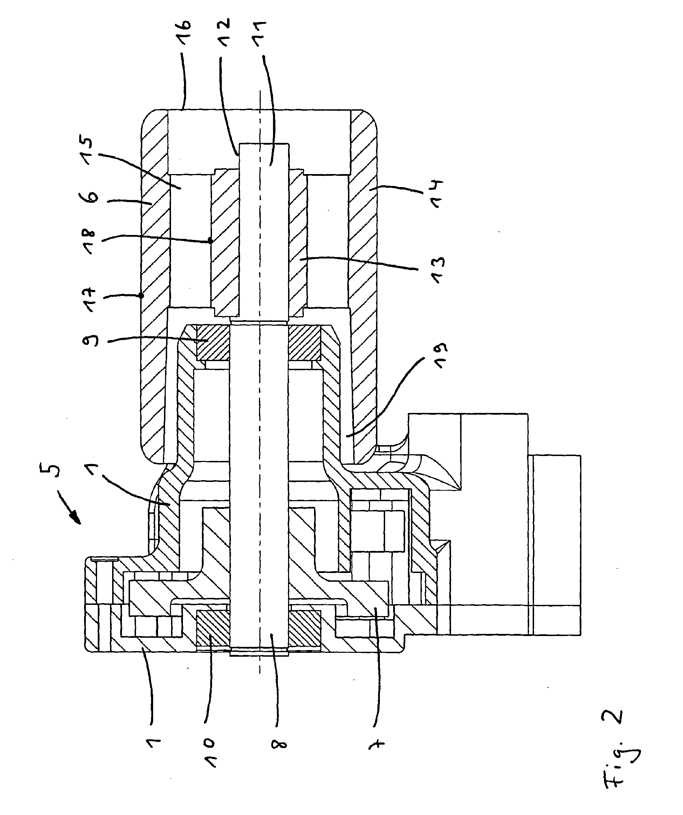

Die Fig. 1 und 2 zeigen einen erfindungsgemäßen Hilfsantrieb in Perspektiv- bzw. Schnittdarstellung.

Der Hilfsantrieb weist einen Träger 1 auf, der relativ zu einem nicht dargestellten Fahrgestell des Anhängers bewegbar ist. Für diesen Zweck kann eine Halterung oder ein Rahmenteil an dem Fahrgestell befestigt werden, zu welchem der Träger dann relativ beweglich ist. Aus der EP 0 827 898 A1 und EP 1 203 713 A1 ist es bekannt, den Träger relativ zu dem Fahrgestell zwischen einer Ruheposition und einer Antriebsposition zu verschwenken, wie oben beschrieben. Demgemäß kann der Träger 1 ebenfalls verschwenkt werden.

Ebenso ist es aber auch möglich, den Träger 1 linear zwischen der Antriebsposition und der Ruheposition zu verschieben. Für diesen Zweck ist eine als Bewegungsmechanismus dienende Spindel 2 vorgesehen, die in eine nicht dargestellte, von dem Fahrgestell bzw. von der am Fahrgestell vorhandenen Halterung getragenen Spindelmutter eingreift und durch einen nicht dargestellten, in dem Träger 1 untergebrachten Spindelmotor oder eine Kurbel gedreht wird. Durch das Betätigen der Spindel kann der Träger 1 linear entlang der Spindelachse hin- und herverschoben werden.

Als Bewegungsmechanismen zum Bewegen des Trägers eignen sich auch andere Einrichtungen, wie zum Beispiel Exzenterhebel, Kniehebel etc. Die Aufgabe des Bewegungsmechanismus besteht darin, den Träger zwischen der Ruheposition und der Antriebsposition zu bewegen und in der jeweiligen Endstellung zuverlässig zu fixieren.

Der Träger 1 kann aus mehreren Bauelementen, wie zum Beispiel Gehäuseschalen aufgebaut sein. Der Begriff "Träger" wird dementsprechend funktional für eine Zusammenfassung von mehreren Bauelementen verwendet, die eine Tragfunktion erfüllen.

An dem Träger 1 ist ein Antriebsmotor 3 befestigt, der in den Figuren nicht erkennbar ist, da er von einer ebenfalls an dem Träger 1 befestigten Motorabdeckung 4 abgedeckt ist.

Der Antriebsmotor 3 treibt über ein Getriebe 5 eine Antriebsrolle 6 drehend an. Das Getriebe 5 ist ebenfalls an dem Träger 1 befestigt bzw. in den Träger 1 integriert.

In der Schnittdarstellung von Fig. 2 ist schematisch ein Zahnrad 7 des Getriebes 5 dargestellt, das auf einer Antriebswelle 8 befestigt ist. Die Antriebswelle 8 ist durch ein Hauptlager 9 und ein Rücklager 10 an dem Träger 1 gelagert.

An einer Vorderseite steht ein Wellenende 11 der Antriebswelle 8 über und erstreckt sich über das Hauptlager 9 hinaus. Das Wellenende 11 stellt ein freies Ende dar und trägt die Antriebsrolle 6. Zur Übertragung des Drehmoments ist eine geeignete Welle-Nabe-Verbindung vorgesehen. Im gezeigten Beispiel ist das Wellenende 11 einseitig abgeflacht, so dass über eine Drehmomentfläche 12 das Drehmoment auf die Antriebsrolle 6 übertragen werden kann.

Die Antriebsrolle 6 weist eine radial innen liegende, auf die Antriebswelle 8 aufschiebbaren Nabe 13 sowie einen radial außen liegenden Mantelbereich 14 auf. Der Mantelbereich 14 ist auf der Nabe 13 mit Hilfe von Rippen 15 gehalten. Ebenso kann die Verbindung zwischen der Nabe 13 und dem Mantelbereich 14 auch massiv ausgeführt werden. Zur Gewichtsersparnis ist es jedoch vorteilhaft, wenn lediglich die Rippen 15 oder geeignete Speichenelemente vorgesehen sind.

Wie insbesondere in Fig. 1 erkennbar ist, weist der Mantelbereich 14 eine konturierte Mantelfläche auf, deren Querschnittsprofil eine Grobstruktur zur Verbesserung des Formschlusses bildet. Das Querschnittsprofil kann zum Beispiel angenähert sinusförmig mit vorstehenden Bereichen (erhöhte Sinuslagen mit größerem radialen Abstand zur Drehachse der Antriebsrolle 6) und zurückstehenden Bereichen (tiefe Sinuslagen mit geringerem radialen Abstand zur Drehachse) aufweisen. Anstelle des in Fig. 1 gezeigten Querschnittsprofils sind auch andere Querschnittsprofile denkbar.

Darüber hinaus ist es zweckmäßig, wenn die Mantelfläche der Antriebsrolle 6 eine erhöhte Rauigkeit aufweist. Dies kann zum Beispiel durch eine spezielle Haftbeschichtung oder auch durch eine durch ein formgebendes Verfahren erzielte Aufrauung der Oberfläche erreicht werden.

Die Antriebsrolle 6 ist axial auf das Wellenende 11 aufgeschoben und in dieser Position durch ein nicht dargestelltes Sicherungselement (zum Beispiel ein Sicherungsring) axial fixiert. Zusätzlich kann an einem offenen stirnseitigen Ende 16 ein Deckel oder eine Kappe befestigt werden, um das Eindringen von Schmutz und Spritzwasser zu vermeiden.

Der Mantelbereich 14 weist eine größere axiale Erstreckung auf als die Nabe 13. Die Antriebsrolle 6 ist somit in Axialrichtung unsymmetrisch. Dabei sind eine axiale Mitte (Punkt 17 des Mantelbereichs 14) und eine axiale Mitte (Punkt 18 der Nabe 13) zueinander axial etwas versetzt. Auf diese Weise kann sich der Mantelbereich 14 so weit wie möglich über den Träger 1 und das Hauptlager 9 erstrecken, so dass auch das Hauptlager 9 gegen Spritzwasser und Schmutz geschützt wird. Zwischen dem das Hauptlager 9 haltenden Träger 1 und der Innenkontur des Mantelbereichs 14 verbleibt lediglich ein geringer Spalt.

Bei der Dimensionierung des Wellenendes 11 und der Antriebsrolle 6 ist darauf zu achten, dass der axiale Abstand zwischen der axialen Mitte 17 des Mantelbereichs 14 und dem Hauptlager 9 möglichst gering sein sollte, um die Hebelwirkung durch die auf den Mantelbereich 14 wirkenden Radialkräfte zu minimieren. Andererseits sollte der Axialabstand zwischen dem Hauptlager 9 und dem Rücklager 10 möglichst groß sein, um eine ausreichende Stützwirkung für das freie Wellenende 11 zu erreichen.

Der Träger 1 kann derart gestaltet sein, dass er das dem Wellenende 11 gegenüberliegende Ende der Antriebswelle 8 sowie das Rücklager 10 vollständig einkapselt und so vor Verschmutzung schützt. Bei der in Fig. 2 gezeigten Ausführungsform der Erfindung wäre es zweckmäßig, das Rücklager 10 und das zugehörige Wellenende durch eine zusätzliche Abdeckung zu verschließen.

## Patentansprüche

1. Hilfsantrieb für einen Anhänger, mit
- einem relativ zu einem Fahrgestell des Anhängers bewegbaren Träger (1);
- einem von dem Träger (1) gehaltenen Antriebsmotor (3);
- einer von dem Antriebsmotor (3) drehend antreibbaren, an dem Träger (1) an wenigstens zwei Lagerstellen (9, 10) gelagerten Antriebswelle;
- einer auf der Antriebswelle (8) befestigten und von der Antriebswelle (8) drehend antreibbaren Antriebsrolle (6); und mit
- einem Bewegungsmechanismus zum Bewegen des Trägers (1) zwischen einer Ruheposition, in der die Antriebsrolle (6) von einem Rad des Anhängers getrennt ist, und einer Antriebsposition, in der die Antriebsrolle (6) gegen das Rad des Anhängers gedrückt wird;
wobei die Antriebsrolle (6) auf der Antriebswelle (8) in einem Bereich befestigt ist, der außerhalb eines zwischen den zwei Lagerstellen (9, 10) liegenden Bereichs liegt; **dadurch gekennzeichnet, dass** eine Antriebskraft des Antriebsmotors (3) in dem zwischen den zwei Lagerstellen (9, 10) liegenden Bereich auf die Antriebswelle (8) übertragbar ist.

2. Hilfsantrieb nach Anspruch 1, **dadurch gekennzeichnet, dass** die Antriebsrolle (6) auf der Antriebswelle (8) fliegend zu den zwei Lagerstellen (9, 10) gelagert ist.

3. Hilfsantrieb nach einem der Ansprüche 1 oder 2, **dadurch gekennzeichnet, dass** die Antriebswelle (8) in dem Zustand, in dem sie an dem Träger (1) gelagert ist, ein freies Wellenende (11) aufweist, auf das die Antriebsrolle (6) axial aufschiebbar ist.

4. Hilfsantrieb nach einem der Ansprüche 1 bis 3, **dadurch gekennzeichnet, dass**
- die Antriebsrolle (6) einen innen liegenden, auf die Antriebswelle (8) axial aufschiebbaren Nabenbereich (13) und einen außen liegenden, das Rad antreibenden Mantelbereich (14) aufweist; und dass
- der Mantelbereich (14) eine größere axiale Erstreckung aufweist als der Nabenbereich (13).

5. Hilfsantrieb nach Anspruch 4. **dadurch gekennzeichnet,**
**dass** der Mantelbereich (14) eine derart große axiale Erstreckung aufweist, dass er wenigstens eine der Lagerstellen (9) axial übergreift.

6. Hilfsantrieb nach Anspruch 4 oder 5, **dadurch gekennzeichnet, dass** eine axiale Mitte (17) des Mantelbereichs (14) und eine axiale Mitte (18) des Nabenbereichs (13) zueinander axial versetzt sind.

7. Hilfsantrieb nach einem der Ansprüche 4 bis 6, **dadurch gekennzeichnet, dass** ein axialer Abstand zwischen einer axialen Mitte (17) des Mantelbereichs (14) und einer der Lagerstellen (9) minimiert ist.

8. Hilfsantrieb nach einem der Ansprüche 4 bis 7, **dadurch gekennzeichnet, dass** der Mantelbereich eine von einer ideal-zylindrischen Kontur abweichende Außenkontur aufweist, zur Erhöhung einer auf das Rad übertragbaren maximalen Antriebskraft.

## Claims

1. Auxiliary drive for a trailer, with
- a carrier (1) movable relative to a trailer chassis;
- a drive motor (3) supported by the carrier (1);
- a drive shaft mounted on the carrier (1) at at least two bearing points (9, 10) and rotationally driven by the drive motor (3);
- a drive roller (6) mounted on the drive shaft (8) and rotationally driven by the drive shaft (8); and with
- a movement mechanism for moving the carrier (1) between a rest position, in which the drive roller (6) is separated from a wheel of the trailer, and a driving position in which the drive roller (6) is pressed against the trailer wheel;
where the drive roller (6) is mounted on the drive shaft (8) in an area which lies outside an area between the two bearing points (9, 10), **characterised in that** a driving force from the drive motor (3) can be transmitted to the drive shaft (8) in the area between the two bearing points (9, 10).

2. Auxiliary drive as defined in Claim 1, **characterised in that** the drive roller (6) is overhung-mounted on the drive shaft (8) at the two bearing points (9, 10).

3. Auxiliary drive as defined in Claim 1 or 2, **characterised in that** the drive shaft (8), as mounted on the carrier (1), has a free shaft end (11) on to which the drive roller (6) can be axially pushed.

4. Auxiliary drive as defined in one of Claims 1 to 3, **characterised in that**
- the drive roller (6) has an internal hub section (13) which can be axially pushed on to the drive shaft (8) and an external outer surface (14) which drives the wheel; and that
- the outer surface (14) has an axial extent greater than that of the hub section (13).

5. Auxiliary drive as defined in Claim 4, **characterised in that** the outer surface (14) has an axial extent large enough to overlap axially at least one of the bearing points (9).

6. Auxiliary drive as defined in Claim 4 or 5, **characterised in that** an axial centre (17) of the outer surface (14) and an axial centre (18) of the hub section (13) are axially offset from one another.

7. Auxiliary drive as defined in one of Claims 4 to 6, **characterised in that** an axial separation between an axial centre (17) of the outer surface (14) and one of the bearing points (9) is minimised.

8. Auxiliary drive as defined in one of Claims 4 to 7, **characterised in that** the outer surface has an outer contour deviating from that of an ideal cylinder to increase a maximum driving power which can be transmitted to the wheel.

## Revendications

1. Entraînement auxiliaire pour remorque, comprenant
- un support (1) qui est mobile par rapport à un châssis de la remorque ;
- un moteur d'entraînement (3) qui est porté par le support (1) ;
- un arbre d'entraînement qui est apte à être entraîné en rotation par le moteur d'entraînement (3) et qui est monté sur le support (1) au niveau d'au moins deux points d'appui (9, 10) ;
- un rouleau d'entraînement (6) qui est fixé sur l'arbre d'entraînement (8) et qui est apte à être entraîné en rotation par celui-ci ; et
- un mécanisme de déplacement pour déplacer le support (1) entre une position de repos dans laquelle le rouleau d'entraînement (6) est séparé d'une roue de la remorque, et une position d'entraînement dans laquelle le rouleau d'entraînement (6) est pressé contre la roue de la remorque ;
le rouleau d'entraînement (6) étant fixé sur l'arbre d'entraînement (8) dans une zone qui se trouve en dehors d'une zone située entre les deux points d'appui (9, 10),
**caractérisé en ce qu'**une force d'entraînement du moteur d'entraînement (3) est apte à être transmise à l'arbre d'entraînement (8) dans la zone située entre les deux points d'appui (9, 10).

2. Entraînement auxiliaire selon la revendication 1, **caractérisé en ce que** le rouleau d'entraînement (6) est monté sur l'arbre d'entraînement (8) de manière flottante par rapport aux deux points d'appui (9, 10).

3. Entraînement auxiliaire selon la revendication 1 ou 2, **caractérisé en ce que** l'arbre d'entraînement (8), lorsqu'il est monté sur le support (1), présente une extrémité libre (11) sur laquelle le rouleau d'entraînement (6) peut être enfilé axialement.

4. Entraînement auxiliaire selon l'une des revendications 1 à 3, **caractérisé**
- **en ce que** le rouleau d'entraînement (6) comporte une zone de moyeu (13) située à l'intérieur, qui est apte à être enfilée axialement sur l'arbre d'entraînement (8), et une zone latérale (14) située à l'extérieur, qui entraîne la roue ;
- et **en ce que** la zone latérale (14) présente une plus grande extension axiale que la zone de moyeu (13).

5. Entraînement auxiliaire selon la revendication 4, **caractérisé en ce que** la zone latérale (14) présente une extension axiale telle qu'elle couvre axialement l'un au moins des points d'appui (9).

6. Entraînement auxiliaire selon la revendication 4 ou 5, **caractérisé en ce qu'**un centre axial (17) de la zone latérale (14) et un centre axial (18) de la zone de moyeu (13) sont décalés axialement l'un par rapport à l'autre.

7. Entraînement auxiliaire selon l'une des revendications 4 à 6, **caractérisé en ce qu'**une distance axiale entre un centre axial (17) de la zone latérale (14) et l'un des points d'appui (9) est minimalisée.

8. Entraînement auxiliaire selon l'une des revendications 4 à 7, **caractérisé en ce que** la zone latérale présente un contour extérieur qui est différent d'un contour cylindrique idéal, afin d'augmenter une force d'entraînement maximale apte à être transmise à la roue.
